# EUROPÄISCHE PATENTANMELDUNG

(11) **EP 4 328 988 A1**
(43) Veröffentlichungstag der Anmeldung: **28.02.2024**
(21) Anmeldenummer: 22192398.0
(22) Anmeldetag: 26.08.2022
(51) Int. Cl.: H01M 4/04, H01M 4/58, H01M 4/62, H01M 4/136, H01M 4/1397

(54) **VERFAHREN ZUR HERSTELLUNG EINER KATHODENPASTE ENTHALTEND EIN LFP-AKTIVMATERIAL-REZYKLAT**

(71) Anmelder: Blackstone Technology GmbH, 04720 Döbeln (DE); Blackstone Technology Holding AG, 6340 Baar (CH); IBU-tec advanced materials AG, 99425 Weimar (DE)
(72) Erfinder: Flaschenträger, David, 6006 Luzern (CH); Fiedler, Andy, 01169 Dresden (DE)
(74) Vertreter: Herrmann, Johanna

(57) **Zusammenfassung**

Ein Verfahren zur Herstellung einer Kathodenpaste (8) enthält ein LFP-Aktivmaterial-Rezyklat (2) während des Produktionsprozesses für eine Lithiumionenbatterie zur Wiederverwendung des LFP-Aktivmaterial-Rezyklats in der Lithiumionenbatterie. Das LFP-Aktivmaterial-Rezyklat 2) wird durch Mahlen in einer Zerkleinerungsvorrichtung (3) auf eine mittlere Korngrösse von 5 µm reduziert, bevor es mit der Kathodenpaste (8) vermischt wird.

## Beschreibung

### Hintergrund

Die vorliegende Erfindung betrifft ein Verfahren zur Herstellung einer Kathodenpaste enthaltend ein LFP-Aktivmaterial-Rezyklat während des Produktionsprozesses für eine Lithiumionenbatterie zur Wiederverwendung des LFP-Aktivmaterial-Rezyklats in der Lithiumionenbatterie. Insbesondere betrifft die vorliegende Erfindung ein Verfahren zur Wiederverwertung von lithiumhaltigem Kathodenmaterial für einen Energiespeicher. Insbesondere betrifft die Erfindung ein Verfahren zur Wiederverwertung des lithiumhaltigen Kathodenmaterials in der Produktion von Lithium-Ionen Energiespeichern.

### Stand der Technik

Lithium-Ionen-Batterien bestehen aus unterschiedlichen Komponenten. Insbesondere Anoden- und Kathoden-Aktivmaterialien tragen maßgeblich zu den Materialkosten der späteren Batterie-Zelle bei und sind ihrerseits in der Herstellung durch eine Verkettung unterschiedlicher thermischer und chemischer Prozesse sehr ressourcen- und energieintensiv.

Sowohl während der Produktion von Batteriezellen als auch nach dem Erreichen der Batterielebensdauer fallen relevante Mengen dieser Stoffe an, wobei es bislang keine etablierten Methoden zur direkten Wiederverwendung dieser Materialien gibt.

Die Rezyklierung von Lithium-Ionen-Batterien fokussierte sich bisher auf die Rückgewinnung einzelner besonders kostenintensiver Stoffe, wie z.B. Kupfer, Nickel und Cobalt, durch eine Verkettung unterschiedlicher Prozessschritte, bei der in der Regel eine "Schwarze Masse" als Zwischenschritt entsteht, welche die diversen Bestandteile in unterschiedlichen Mengen der Batterie-Zellen enthält. Insbesondere können die oben genannten Metalle durch verschiedene thermische und hydrometallurgische Prozesse zurückgewonnen werden, ehe sie in einem frühen Stadium der Aktivmaterial-Herstellung wiederverwertet werden.

Bedingt durch die energie- und ressourcenintensive Natur dieser Prozesse selbst, führt dies dazu, dass weniger kostenintensive Materialien und deren Ausgangsstoffe, wie z.B. Graphit, Lithium-Eisen-Phosphat, in der Folge als LFP bezeichnet, oder auch Kunststoffe, thermisch verwertet und somit allenfalls als Energielieferanten für einen oder mehrere Prozesse dienen oder generell während der Prozesse verloren gehen.

Es ist aus WO2016008813A1 ein Verfahren zur Rezyklierung von Kathodenmaterial einer Lithiumionenbatterie bekannt, welches für eine Kathode einer Lithiumionenbatterie zum Einsatz kommt, welche eine mit dem Kathodenmaterial beschichtet ist, aber beim Herstellungsprozess der Lithiumionenbatterie als Abfall anfällt. Für dieses Kathodenmaterial kann die Kathode in einem Prallzerkleinerer zu einer teilchenförmigen Kathode zerkleinert werden, sodass Metallfolienpartikel mit einer Partikelgrösse von mindestens 200 µm erhalten werden und Kathodenmaterialpartikel mit einer Partikelgrösse, die weniger als 200 µm beträgt. Die teilchenförmige Kathode wird anschliessend in einem Staubabscheider filtriert und die Kathodenmaterialpartikel werden über mehr als ein Sieb abgetrennt, wodurch recyceltes Kathodenmaterial erhalten wird. Das Kathodenmaterial kann ein Bindemittel enthalten, welches einen Anteil im Bereich von 0.001 bis 5 Gewichtsprozent des recycelten Kothodenmaterial aufweisen kann. Mit diesem Verfahren wird gezeigt, dass ein Kathodenmaterial wiederverwertet werden kann, ohne dass ein Aufschmelzen des Kathodenmaterials erforderlich ist. Allerdings ist dieses Verfahren auf die Rezyklierung von neuwertigem Kathodenmaterial beschränkt, denn das als Abfall anfallende Kathodenmaterial war nie im Einsatz, hat also keine Lade- und Entladezyklen durchlaufen.

Insbesondere die Rezyklierung von LFP aus gebrauchten Lithiumionenbatterien gibt es bis heute somit kein wirtschaftliches Verfahren.

Daher besteht ein Bedarf, Kathodenmaterial von Lithiumionenakkumulatoren energieeffizient zu rezyklieren, welches von Lithiumionenakkumulatoren stammt, welche das Ende ihrer Betriebsdauer erreicht haben. Ein derartiges Verfahren wird im Dokument DE 10 2018 001 273 A1 beschrieben, gemäss welchem die Kathode zum Ablösen des Aktivmaterials vom Basismaterial der Kathode einer Behandlung in Wasser oder einer wässrigen Salzlösung unterzogen wird. Das Wasser oder die wässrige Salzlösung stehen im Verhältnis von 25:1 bis 100:1 dem Elektrodenmaterial beigemischt. Die Temperatur kann im Bereich von 10 bis 60 Grad Celsius liegen. Insbesondere kann die wässrige Salzlösung 0.1 bis 2 Mol/l der Hydrogenkarbonate der Alkalimetalle Lithium, Natrium oder Kalium oder der Erdalkalimetalle Magnesium, Kalzium oder Barium enthalten.

Aufgabe der Erfindung ist die Wiederverwertung ressourcen- und energieintensiver Rohstoffe in der Produktion von Lithiumionenbatterien.

### Beschreibung der Erfindung

Wenn der Begriff "beispielsweise" in der nachfolgenden Beschreibung verwendet wird, bezieht sich dieser Begriff auf Ausführungsbeispiele und/oder Ausführungsformen, was nicht notwendigerweise als eine bevorzugtere Anwendung der Lehre der Erfindung zu verstehen ist. In ähnlicher Weise sind die Begriffe "vorzugsweise", "bevorzugt" zu verstehen, indem sie sich auf ein Beispiel aus einer Menge von Ausführungsbeispielen und/oder Ausführungsformen beziehen, was nicht notwendigerweise als eine bevorzugte Anwendung der Lehre der Erfindung zu verstehen ist. Dementsprechend können sich die Begriffe "beispielsweise", "vorzugsweise" oder "bevorzugt" auf eine Mehrzahl von Ausführungsbeispielen und/oder Ausführungsformen beziehen.

Die nachfolgende detaillierte Beschreibung enthält verschiedene Ausführungsbeispiele für das erfindungsgemässe Verfahren sowie die erfindungsgemässe Vorrichtung. Die Beschreibung eines bestimmten Verfahrensablaufs ist nur als beispielhaft anzusehen. In der Beschreibung und den Ansprüchen werden die Begriffe "enthalten", "umfassen", "aufweisen" als "enthalten, aber nicht beschränkt auf" interpretiert.

Die Erfindung betrifft ein Verfahren zur Herstellung einer Kathodenpaste enthaltend ein LFP-Aktivmaterial-Rezyklat während des Produktionsprozesses für eine Lithiumionenbatterie zur Wiederverwendung des LFP-Aktivmaterial-Rezyklats in der Lithiumionenbatterie. Das LFP-Aktivmaterial-Rezyklat wird durch Mahlen in einer Zerkleinerungsvorrichtung auf eine mittlere Korngrösse von 5 µm reduziert wird, bevor es mit der Kathodenpaste vermischt.

Die Erfindung kann insbesondere ein Verfahren zur Zuführung von LFP-Aktivmaterial-Rezyklat in ungereinigtem oder gereinigtem Zustand durch direkte Zugabe zu einem LFP Aktivmaterial oder während eines Herstellungsverfahrens einer Kathodenpaste während des Produktionsprozesses für eine Lithiumionenbatterie betreffen. Das LFP-Aktivmaterial-Rezyklat kann somit einer Wiederverwendung in der Lithiumionenbatterie zugeführt werden. Das LFP-Aktivmaterial-Rezyklat kann auch der Kathodenpaste zugeführt werden, sodass eine Mischung des bereits in der Kathodenpaste enthaltenen LFP-Aktivmaterials mit dem LFP-Aktivmaterial-Rezyklat erfolgt. Gemäss eines Verfahrensschritts erfolgt eine Mischung von LFP-Aktivmaterial-Rezyklat mit einem LFP-Aktivmaterial, welches als Elektrodenpaste für die Lithiumionenbatterie verwendet wird. Gemäss eines Ausführungsbeispiels wird das LFP-Aktivmaterial-Rezyklat mit einem LFP-Aktivmaterial vermischt, bevor die Kathodenpaste hergestellt wird. Gemäss eines Ausführungsbeispiels wird das LFP-Aktivmaterial-Rezyklat in eine Extrusionsvorrichtung eingebracht. Gemäss eines Ausführungsbeispiels wird das LFP-Aktivmaterial-Rezyklat der Kathodenpaste beigemischt.

Gemäss eines Ausführungsbeispiels enthält die Kathodenpaste das LFP-Aktivmaterial-Rezyklat mit einem Massenanteil von bis zu 80 Gewichtsprozent.

Gemäss eines Ausführungsbeispiels kann der Massenanteil des LFP-Aktivmaterial-Rezyklats 10 Gewichtsprozent bis einschliesslich 20 Gewichtsprozent des LFP-Aktivmaterials betragen.

Für die Herstellung von Batterie-Elektroden wird gemäss eines Ausführungsbeispiels zumindest eines der Elemente bestehen aus dem LFP- Aktivmaterial, und dem LFP welches 90 Gewichtsprozent bis einschliesslich 98 Gewichtsprozent LFP-Pulver und 2 Gewichtsprozent bis einschliesslich 10 Gewichtsprozent Additive und/oder Lösungsmittel enthält, zu Slurries oder Pasten vermischt, wodurch die Kathodenpaste erhalten wird.

Insbesondere wird das LFP-Aktivmaterial-Rezyklat während der Herstellung der Kathodenpaste, das heisst während des Verfahrens zur Herstellung der Kathodenaste oder eines Slurries zugegeben, wobei eine Mischung in der Kathodenpaste erfolgt. Insbesondere kann die Kathodenpaste bereits ein LFP-Aktivmaterial sowie dessen Additive enthalten, die mit dem LFP-Aktivmaterial-Rezyklat gemischt werden. Im LFP-Aktivmaterial-Rezyklat sind ebenfalls Additive und/oder Verunreinigungen enthalten. Insbesondere können die Additive und/oder Verunreinigungen, die im LFP-Aktivmaterial-Rezyklat enthalten sind, im Bereich von 0,2 Gewichtsprozent bis einschliesslich 1 Gewichtsprozent liegen. Die Verarmung von Lithium, das heisst, die Reduktion des Lithiumanteils im LFP-Aktivmaterial-Rezyklat liegt im Bereich von 1 Gewichtsprozent bis 5 Gewichtsprozent. Nach Mischung des LFP-Aktivmaterial-Rezyklats mit dem LFP-Aktivmaterial beträgt die Reduktion an Lithium je nach Anteil an LFP-Aktivmaterial in der Mischung 0,1 Gewichtsprozent bis einschliesslich 5 Gewichtsprozent. Insbesondere kann dem LFP-Aktivmaterial-Rezyklat Lithium zugegeben werden, um die Reduktion an Lithium zu kompensieren. Insbesondere kann dem LFP-Aktivmaterial-Rezyklat Lithium im Bereich von 0.1 Gewichtsprozent bis einschliesslich 5 Gewichtsprozent zugegeben werden.

Das LFP-Aktivmaterial-Rezyklat inklusive der darin enthaltenen Additive und Bindemittel wird gemäss eines Ausführungsbeispiels als Pulver mit dem mit dem LFP-Aktivmaterial in einer Dosieranlage dosiert und anschließend in einer Mischanlage gemischt. Wenn das LFP-Aktivmaterial-Rezyklat Additive und/oder Bindemittel enthält, verändert sich der Anteil der Additive und/oder Bindemittel in der Mischung aus LFP-Aktivmaterial-Rezyklat und LFP-Aktivmaterial. Mit anderen Worten wird der Anteil an Additiven und/oder Bindemitteln in der Mischung neu eingestellt.

Gemäss eines Ausführungsbeispiels umfasst das Verfahren die Zuführung von LFP-Aktivmaterial-Rezyklat zu der Kathodenpaste während des Produktionsprozesses für eine Lithiumionenbatterie zur Wiederverwendung des LFP-Aktivmaterial-Rezyklats in der Lithiumionenbatterie, wobei die Kathodenpaste ein LFP Aktivmaterial enthält, welches 90 Gewichtsprozent bis einschliesslich 98 Gewichtsprozent LFP-Pulver und 2 Gewichtsprozent bis einschliesslich 10 Gewichtsprozent einer Substanz aus der Gruppe bestehend aus Additiven, Lösungsmittel oder Bindemittel enthält, wobei das LFP-Aktivmaterial-Rezyklat mit dem LFP-Aktivmaterial zur Elektrodenpaste für die Lithiumionenbatterie vermischt wird.

Gemäss eines Ausführungsbeispiels enthält das LFP-Aktivmaterial-Rezyklat zumindest eine Substanz aus der Gruppe bestehend aus Additiven, Lösungsmitteln oder Bindemitteln.

Gemäss eines Ausführungsbeispiels wird dem Lithium LFP-Aktivmaterial-Rezyklat zufügt. Das Lithium kann beispielsweise durch ein Elektrolytgemisch oder ein Recycling einer Anode mit Lithium-Überschuss erhalten werden.

Insbesondere kann die Kathodenpaste einen Anteil an LFP-Aktivmaterial-Rezyklat von bis zu 100% enthalten. Mit anderen Worten kann eine Kathodenpaste zum Einsatz kommen, die zu 100% aus LFP-Aktivmaterial-Rezyklat besteht.

Gemäss eines Ausführungsbeispiels wird das LFP-Aktivmaterial-Rezyklat mit einem Anteil von bis zu 25 Gewichtsprozent dem LFP-Aktivmaterial oder der Kathodenpaste zugeführt. Gemäss dieses Ausführungsbeispiels können eine Substanz aus der Gruppe bestehend aus Additiven, Lösungsmitteln oder Bindemitteln oder eine Einlagerung von Lithium im LFP-Aktivmaterial-Rezyklat neutralisiert werden. Das erhaltene Gemisch aus LFP-Aktivmaterial-Rezyklat und LFP-Aktivmaterial hat vergleichbare Eigenschaften zu einem LFP-Aktivmaterial ohne Beimischung von LFP-Aktivmaterial-Rezyklat.

Gemäss eines Ausführungsbeispiels kann eine Vorbehandlung des LFP-Aktivmaterial Rezyklats im flüssigen Zustand erfolgen, um eine Homogenisierung einer Suspension zu erzielen. Gemäss eines Ausführungsbeispiels kann ein LFP-Aktivmaterial-Rezyklat in trockener Form, beispielsweise als Pulver oder in feuchter Form, beispielsweise als Suspension in einem SPT-Prozess verarbeitet werden.

Gemäss eines Ausführungsbeispiels kann das LFP-Aktivmaterial-Rezyklat in der Kalzination mit verarbeitet werden. Insbesondere kann das das LFP-Aktivmaterial-Rezyklat zur der Zugabe zu einem Kalzinationsverfahren getrocknet werden. Alternativ oder zusätzlich kein eine thermische Behandlung vor dem Kalzinationsverfahren erfolgen.

Gemäss eines Ausführungsbeispiels kann das LFP-Aktivmaterial-Rezyklat getrocknet und kalziniert werden, bevor es der Zerkleinerungsvorrichtung zugeführt wird.

Gemäss eines Ausführungsbeispiels können Elektroden, die mittels eines wässrigen Verfahren hergestellt und/oder in einem wässrigen Verfahren genutzt worden sind, in ein Wasserbad eingebracht werden. Das wässrige Bindersystem wird im Wasser gelöst, sodass eine einfache Trennung von Aluminium und LFP-Aktivmaterial-Rezyklat erfolgen kann. Nach Abtrennung des Aluminiums vom LFP-Aktivmaterial-Rezyklat können weitere unlöslichen Bestandteile abgetrennt werden. Das LFP-Aktivmaterial-Rezyklat kann getrocknet werden und gemäss einer der vorgängig beschriebenen Verfahrensvarianten dem LFP-Aktivmaterial oder der Kathodenpaste zugesetzt werden um eine Kathodenpaste für eine Kathode, welche LFP-Aktivmaterial-Rezyklat enthält, herzustellen.

Eine Vorrichtung zur Herstellung einer Kathodenpaste enthaltend ein LFP-Aktivmaterial-Rezyklat umfasst eine Zerkleinerungsvorrichtung in welcher das LFP-Aktivmaterial-Rezyklat durch Mahlen auf eine mittlere Korngrösse von 5 µm reduzierbar ist. Die Vorrichtung kann eine Mischvorrichtung zur Mischung des LFP-Aktivmaterial-Rezyklats mit einer Substanz, aus der Gruppe bestehend aus Additiven, Lösungsmitteln oder Bindemitteln oder einem LFP-Aktivmaterial umfassen. Insbesondere kann die Mischvorrichtung eine Extrusionsvorrichtung zur Herstellung der Kathodenpaste umfassen.

Eine Anlage zur Herstellung einer Zelle eines Energiespeichers kann eine Vorrichtung nach einem der vorhergehenden Ausführungsbeispiele umfassen. Insbesondere ist eine mit der Vorrichtung hergestellte Kathodenpaste einer Fertigungsvorrichtung zur Herstellung einer Elektrode, insbesondere einer Kathode zuführbar. Die Elektrode kann in einer Zellbauvorrichtung in einem Zellbauverfahren zur Herstellung einer Zelle eines Energiespeichers verwendet werden. Basierend auf den Resultaten der Analyse kann der Elektrode in der Zellbauvorrichtung ein Elektrolyt zugegeben werden.

Die Zelle kann als eine elektrochemische Zelle für eine Primärbatterie oder eine Sekundärbatterie zum Einsatz kommen. Als Primärbatterie wird in der Folge eine Batterie bezeichnet, die nicht wiederaufladbar ist, das heisst, für den einmaligen Gebrauch bestimmt ist. Als Sekundärbatterie wird in der Folge eine Batterie bezeichnet, die wiederaufladbar ist: Oftmals wird für diesen Typ Energiespeicher auch der Begriff Akkumulator verwendet.

Sekundärbatterien sind bereits seit Jahrzehnten in verschiedensten Anwendungen im Einsatz, für deren elektrochemische Zellen können unterschiedlichste Materialien zum Einsatz kommen. Die Verwendungen für Sekundärbatterien nehmen zu, sie kommen beispielsweise in tragbaren elektronischen Geräten, in medizintechnischen Geräten, im Transportwesen, als Notstromaggregat, als Speicher zum Ausgleich von Schwankungen in der Stromversorgung, als Speichersystem für erneuerbare Energien.

Eine elektrochemische Zelle umfasst eine Kathode, also eine positive Elektrode, eine Anode, also eine negative Elektrode, einen Separator, der die positive Elektrode von der negativen Elektrode trennt, sowie ein Gehäuse, welches die positive Elektrode, die negative Elektrode, den Separator und einen Elektrolyten aufnimmt, in welchem die vorgenannte positive Elektrode, die negative Elektrode und der Separator zumindest teilweise aufgenommen sind. Die Anode und Kathode können über Kontakte einen Stromkreis mit einem Verbraucher ausbilden.

Damit Kathode und Anode nicht direkt miteinander in elektrischen Kontakt kommen, wird ein Separator zwischen jeder Kathode und Anode vorgesehen. Gemäss einer Verfahrensvariante kann eine der Elektroden in eine Separatortasche gesteckt werden. Der Separator kann als ein blattförmiges, mikroporöses Trennelement ausgebildet sein, welches für den Elektrolyten, Elektronen oder Ionen durchlässig ist, aber nicht für die Partikel der entsprechenden positiven oder negativen pastenförmigen aktiven Masse.

Kathoden, Separatoren und Anoden werden zu einem Zellstapel gebündelt, welcher die Primärzelle bildet. Der Zellstapel enthält üblicherweise 6 Kathoden, 6 Anoden die abwechselnd zueinander angeordnet sind, sowie die entsprechende Anzahl Separatoren, die sich zwischen je zwei benachbarten Kathoden und Anoden befinden. In einem nachfolgenden Verfahrensschritt werden die Kathoden elektrisch leitend miteinander verbunden, sodass bei Anlegen einer elektrischen Spannung ein Strom zu den Kathoden fliessen kann oder von den Kathoden abfliessen kann. In gleicher Weise werden die Anoden elektrisch leitend miteinander verbunden, sodass bei Anlegen einer elektrischen Spannung ein Strom zu den Anoden fliessen kann oder von den Anoden abfliessen kann.

Ein Akkumulator enthält eine Mehrzahl von Zellstapeln. Die Zellstapel werden in ein Kunststoffgehäuse gestellt, welches zur Aufnahme des Elektrolyten bestimmt ist. Benachbarte Zellstapel sind durch Gehäusezwischenwände voneinander getrennt. Die Kontakte der Kathoden und Anoden jeweils benachbarter Zellstapel werden miteinander üblicherweise mittels eines Schweissverfahrens verbunden. Das Gehäuse wird danach mittels eines Deckels verschlossen. Der Deckel kann Öffnungen für die positiven und negativen Kontaktpole sowie Öffnungen zur Zufuhr eines flüssigen Elektrolyten enthalten, so ein derartiger flüssiger Elektrolyt zum Einsatz kommt. Die Kontaktpole werden nach der Montage des Deckels angegossen. Der Deckel ist üblicherweise nicht abnehmbar, daher wird jedem Zellstapel der Elektrolyt durch die hierfür vorgesehenen Öffnungen zugeführt, die nach Abschluss der Befüllung ebenfalls verschlossen werden. Erst in diesem Zustand kann ein initialer Ladezyklus (Formation) durchgeführt werden. Nach Abschluss des Ladezyklus ist der Akkumulator bereit für den Einsatz. Alternativ befinden sich die Elektroden und der Elektrolyt in einer sogenannten Pouchzelle. Pouchzellen können zu Zellstapeln gebündelt werden und in einem Gehäuse aufgenommen sein. Die Kontakte der Pouchzellen werden je nach Bedarf in einer Parallelschaltung oder Serienschaltung zusammengefasst.

Für jede der Varianten können hochkapazitive Elektroden zum Einsatz kommen, mittels welchen die Elektrodeneigenschaften verbessert werden können, insbesondere die Energiedichte erhöht werden kann. Wenn eine derartige Elektrode einen Anteil an LFP Aktivmaterial-Rezyklat enthält, der insbesondere maximal 25 Gewichtsprozent beträgt, ist keine nennenswerte Einbusse an Leistung zu erwarten.

Die Verbesserung der Elektrodeneigenschaften kann vorteilhafterweise in der Elektromobilität eine Verringerung der Ladedauer zur Folge haben. Aber auch stationäre Energiespeicher und elektronische Konsumprodukte würden von der Verbesserung der Schellladefähigkeit der Energiespeicher profitieren. Die Beschaffenheit der Elektroden definiert zahlreiche Eigenschaften der Energiespeicher, wie beispielsweise die verfügbare Kapazität, Schnellladefähigkeit und Leistungsbereitstellung.

Bei einem lithiumbasierten Energiespeicher wird beim Laden und Entladen des Energiespeichers Lithium in die Aktivmaterialien ein- bzw. ausgelagert. Durch die poröse Struktur der Elektrode ergeben sich jedoch lange und komplexe Lithium-Ionen-Transportwege in der Elektrolytflüssigkeit. Diese haben teilweise starke Lithium-Konzentrationsgradienten in den Elektroden zur Folge, welche einen Abfall der verfügbaren Kapazität aufgrund von Lithiumverarmung an den Aktivmaterialoberflächen verursachen. Zur Erhöhung der Speicherkapazität werden Elektroden vorgeschlagen, die Schichtdicken von bis zu 300 µm aufweisen. Zur Steigerung der Energiedichte werden somit hochkapazitive Elektroden eingesetzt. Es hat sich aber gezeigt, dass bei Zunahme der Schichtdicke die Geschwindigkeit des Ladevorgangs der Zelle reduziert wird, welche durch die vorgenannten Effekte bedingt ist. Mit anderen Worten wird die Schnellladefähigkeit der Zelle durch die hohe resultierende Schichtdicke eingeschränkt. Die Einbringung von Strukturierungen in die Elektroden stellt eine Variante zur Verringerung der erwähnten Lithium-Konzentrationsgradienten dar.

Eine mittels des erfindungsgemässen Verfahrens hergestellte Kathode für einen Energiespeicher kann insbesondere mittels einer Siebdruckvorrichtung hergestellt werden. Das Siebdruckverfahren zur Herstellung der Kathode umfasst das Auftragen der Kathodenpaste mittels der Siebdruckvorrichtung auf ein Substrat. Die Siebdruckvorrichtung enthält ein Sieb zur Aufnahme der Kathodenpaste, wobei die Kathodenpaste mittels eines Presselements durch das Sieb auf das Substrat aufgetragen wird, sodass eine gedruckte Kathodenpaste erhalten wird. Das Sieb kann Sieböffnungen enthalten, die als geschlossene Sieböffnungen ausgebildet sind, sodass die Kathodenpaste eine Strukturierung enthält, wenn sie durch das Sieb auf das Substrat gedruckt wird, wobei die Strukturierung erhalten wird, weil die geschlossenen Sieböffnungen den Durchfluss der Kathodenpaste durch das Sieb an den Stellen verhindern, welche die geschlossenen Sieböffnungen enthalten, sodass an den Stellen der gedruckten Kathodenpaste, die unterhalb der geschlossenen Sieböffnungen angeordnet sind, ein Hohlraum in der gedruckten Kathodenpaste entsteht. Somit wird lokal keine Kathodenpaste auf das Substrat aufgetragen, die gedruckte Kathodenpaste enthält somit Lücken, die den Hohlräumen entsprechen.

Das Sieb kann eine Gitterstruktur enthalten. Insbesondere kann die Gitterstruktur durch Maschen ausgebildet sein. An determinierten Stellen im Sieb können Maschen verschlossen werden, somit kann beim späteren Siebdruckverfahren keine Kathodenpaste an den Stellen auf das Substrat gelangen, die sich unterhalb einer geschlossenen Masche befinden. In der gedruckten Kathodenpaste entstehen somit Hohlräume oder Löcher, wobei diese Hohlräume oder Löcher eine Mikrostruktur ausbilden. Die Maschen können durch einen Draht gebildet werden. Insbesondere kann die Dicke des Drahts veränderlich sein.

Beim Druck in mehreren Schichten können die Mikro-Strukturen genau eingestellt werden. Die Verteilung der Mikro-Strukturen in z-Richtung kann einen Gradienten aufweisen. Mikro-Strukturen können in Bereichen von 1mm bis 50µm erzeugt werden. Somit ergibt sich kein Aktivmaterialverlust, keine zusätzlichen Arbeitsschritte, kein Energieaufwand. Zusätzliche Anlagen sind nicht erforderlich. Mit der Varianz der Maschenweite des Siebes kann man die Mikro-Strukturen exakt einstellen. Mit der Varianz der Drahtstärke des Siebes kann man die Mikro-Strukturen exakt einstellen. Mit der Kombination von unterschiedlichen Siebkonfigurationen, die nacheinander für das Drucken verwendet werden, kann man Poren in die Elektroden gezielt einbauen.

Durch Nachschalten eines zweiten Prozessschrittes zwischen dem eigentlichen Druck- und Trocknungsprozess, kann z.B. mit einer entsprechenden Walze, Sieb oder ähnliches, eine exakt definierte Strukturierung in das noch feuchte Druckbild übertragen werden, welches unabhängig vom eigentlichen Druck/Beschichtung ist, z.B. sehr feine Strukturen, welche kleiner sind als die Maschenweite des Drucksiebs

Durch Beschichtung/Druck auf eine nicht-planare Ebene und anschließende (partielle) Trocknung, weist der Verbund aus Substrat und Beschichtung eine gekrümmte Form auf. Durch mechanisches Strecken des Verbundes, reißt die Beschichtung partiell ein. Bei optimaler Prozessführung wird ein stochastisches Muster mit dem gewünschten Oberflächenzu Volumenverhältnis erreicht. Der Ausgangspunkt jedes Risses kann durch geeignete oberflächliche Strukturierung bestimmt werden und und eine gewünschte Form eines Risses erzwungen werden.

Gemäss einer Verfahrensvariante können zwei aufeinanderfolgende Druckschritte erfolgen, wobei in einem ersten Druckschritt ein erster Anteil einer Kathodenpaste auf ein Substrat aufgetragen wird, wobei anschliessend mittels einer Pressvorrichtung eine Druckkraft auf den ersten Anteil der Kathodenpaste aufgebracht wird, um den ersten Anteil der Kathodenpaste zu verdichten, sodass ein verdichteter erster Anteil der Kathodenpaste als eine erste Teilschicht erhalten wird, wobei in einem zweiten Druckschritt ein zweiter Anteil der Kathodenpaste auf die erste Teilschicht aufgetragen wird, wobei anschliessend eine Druckkraft auf den zweiten Anteil der Kathodenpaste aufgebracht wird, um den zweiten Anteil der Kathodenpaste zu verdichten, sodass ein verdichteter zweiter Anteil der Kathodenpaste als eine zweite Teilschicht erhalten wird.

Insbesondere ist die Druckkraft zur Herstellung des verdichteten zweiten Anteils der Elektrodenpaste kleiner als die Druckkraft zur Herstellung des verdichteten ersten Anteils der Elektrodenpaste. Insbesondere weist der verdichtete erste Anteil der Elektrodenpaste eine kleinere Porosität auf als der verdichtete zweite Anteil der Elektrodenpaste. Mit anderen Worten weist gemäss dieses Ausführungsbeispiels die erste Teilschicht eine kleinere Porosität als die zweite Teilschicht auf.

Gemäss eines Ausführungsbeispiels wird in einem dritten Druckschritt ein dritter Anteil der Elektrodenpaste auf den verdichteten zweiten Anteil der Elektrodenpaste aufgetragen, wobei anschliessend eine Druckkraft auf den dritten Anteil der Elektrodenpaste aufgebracht wird, um den dritten Anteil der Elektrodenpaste zu verdichten, sodass ein verdichteter dritter Anteil der Elektrodenpaste als eine dritte Teilschicht erhalten wird.

Insbesondere weist der verdichtete zweite Anteil der Elektrodenpaste eine kleinere Porosität auf als der verdichtete dritte Anteil der Elektrodenpaste. Mit anderen Worten weist gemäss dieses Ausführungsbeispiels die zweite Teilschicht eine kleinere Porosität als die dritte Teilschicht auf.

Insbesondere kann die Porosität der ersten Teilschicht im Bereich von 10 bis einschliesslich 70 % liegen.

Gemäss eines Ausführungsbeispiels erfolgt nach zumindest einem der Druckschritte eine Trocknung zumindest eines der ersten oder zweiten Anteile der Elektrodenpaste mittels einer Trocknungsvorrichtung.

Gemäss eines Ausführungsbeispiels wird die Druckkraft durch eine Kalandriervorrichtung erzeugt. Insbesondere kann die Pressvorrichtung als Kalandriervorrichtung ausgebildet sein. Mittels einer Kalandriervorrichtung kann der Pressvorgang kontinuierlich erfolgen, sodass eine kontinuierliche Prozessführung ermöglicht ist.

Eine Kathode für einen Energiespeicher kann eine erste Schicht, die einen ersten Anteil einer Kathodenpaste enthält und zumindest einen zweite Schicht, die einen zweiten Anteil einer Kathodenpaste enthält, umfassen, wobei die zweite Schicht auf der ersten Schicht aufgetragen ist. Insbesondere kann erste Schicht eine Porosität Y1 aufweisen und die zweite Schicht eine Porosität Y2 aufweisen, wobei die Porosität Y1 kleiner als die Porosität Y2 der zweiten Schicht ist. Insbesondere ist die Kathode mittels eines Verfahrens nach einem der vorhergehenden Ausführungsbeispiele hergestellt.

Ein Energiespeicher kann eine Kathode nach einem der vorhergehenden Ausführungsbeispiele enthalten. Der Energiespeicher kann mindestens eine Zelle enthalten, die eine Elektrode enthält, die als Anode ausgebildet ist und eine weitere Elektrode, die als Kathode ausgebildet ist. Die Zelle für den Energiespeicher umfasst mindestens eine Kathode, mindestens eine Anode, ein zwischen der Kathode und der Anode angeordnetes Separatorelement sowie einen Elektrolyten, in welchem sich die Kathode, die Anode und das Separatorelement im Betriebszustand befinden. Die Kathode enthält insbesondere ein LFP-Aktivmaterial-Rezyklat, die Anode enthält insbesondere Graphit.

LFP wird in diesem Text als Kürzel für die Komponente Lithiumeisenphosphat, LiFePO₄ verwendet.

Gemäss eines Ausführungsbeispiels enthält die Anode Anodenpaste, die Graphit enthält. Gemäss eines Ausführungsbeispiels enthält zumindest eine der Kathodenpasten oder Anodenpasten ein Bindemittel, das CMC enthält. CMC wird in diesem Text als Kürzel für die Komponente Carboxymethylcellulose verwendet.

Insbesondere kann nach einem Ausführungsbeispiel die Kathode eine Kathodenpaste umfassen, die einen Massenanteil an aktiver Masse von 50% bis einschliesslich 95% aufweist. Die Kathodenpaste kann zumindest ein Bindemittel, ein Lösungsmittel und/oder ein leitfähiges Additiv enthalten. Beispielsweise enthält die Kathodenpaste als aktive Masse ein LFP-Aktivmaterial oder ein LFP-Aktivmaterial-Rezyklat, als Bindemittel CMC und als Leitadditiv Leitruss oder Graphit. Leitruss wird nachfolgend als C65 bezeichnet. Graphit wird nachfolgend als K6SL bezeichnet. Eine derartige Kathodenpaste kann vorteilhafterweise in einem kontinuierlichen Herstellungsverfahren in einer kontinuierlich arbeitenden Fertigungsvorrichtung zu einer Kathode für eine Zelle eines Energiespeichers verarbeitet werden. Insbesondere kann die Kathode mittels eines Siebdruckverfahrens hergestellt werden oder herstellbar sein.

Gemäss eines Ausführungsbeispiels liegt der Massenanteil an CMC in der Kathodenpaste oder der Anodenpaste im Bereich von 1 [w%] bis einschliesslich 6[w%]. Der Massenanteil CMC kann gemäss eines Ausführungsbeispiels beispielsweise ungefähr 2 [w%] betragen. Gemäss eines Ausführungsbeispiels kann ein Bindemittelgemisch, enthaltend eine Mehrzahl an Bindemitteln vorgesehen sein, wobei eines der Bindemittel CMC enthält. Beispielsweise kann das Bindemittelgemisch CMC und Styrol-Butadien-Kautschuk, nachfolgend als SBR bezeichnet, enthalten. Der Massenanteil SBR kann gemäss eines Ausführungsbeispiels im Bereich von 1 [w%] bis einschliesslich 4 [w%] liegen, beispielsweise ungefähr 3 [w%] betragen. Insbesondere kann SBR als Suspension verwendet werden.

Als Leitadditive können gemäss eines Ausführungsbeispiels Leitruss, nachfolgend als C65 bezeichnet und Graphit, nachfolgend als KS6L bezeichnet, verwendet werden. Beispielsweise kann C65 in einem Bereich von 1 [w%] bis einschliesslich 4 [w%] liegen, insbesondere im Bereich von 2 [w%] bis einschliesslich 3.5 [w%] liegen. Beispielsweise kann KS6L in einem Bereich von 1 [w%] bis einschliesslich 4 [w%] liegen, insbesondere im Bereich von 1 [w%] bis einschliesslich 3 [w%] liegen. Gemäss eines Ausführungsbeispiels beträgt der Massenanteil an C65 3.75 [w%] und der Massenanteil an KS6L 1.25 [w%]. Gemäss eines Ausführungsbeispiels beträgt der Massenanteil an C65 2.5 [w%] und der Massenanteil an KS6L 2.5 [w%].

Gemäss eines Ausführungsbeispiels liegt die Porosität zumindest einer der Kathodenpasten und der Anodenpasten im Bereich von 20% bis einschliesslich 50%. Gemäss eines Ausführungsbeispiels liegt die Porosität zumindest einer der Kathodenpasten und der Anodenpasten im Bereich von 30% bis einschliesslich 40%.

Gemäss eines Ausführungsbeispiels beträgt der Massenanteil an aktiver Masse 50 bis einschliesslich 90 [w%], der Massenanteil an CMC 2 [w%] bis einschliesslich 6 [w%] und der Massenanteil an Leitadditiv 1 [w%] bis einschliesslich 6 [w%]. Die Kathodenpaste kann eine Porosität aufweisen, die im Bereich von 20% bis einschliesslich 50% liegt. Beispielsweise kann die Porosität einer Kathodenpaste oder Anodenpaste, die einen Massenanteil an aktiver Masse von 50 [w%] bis einschliesslich 90 [w%], einen Massenanteil an CMC von 5% und einen Massenanteil an Leitadditiv von 5 % enthält, im Bereich von 30% bis einschliesslich 40% liegen. Die Schichtdicke dieser Kathode kann im Bereich von 50 bis einschliesslich 300 µm, insbesondere 100 bis einschliesslich 200 µm betragen.

Insbesondere weist zumindest eine der Kathodenpasten oder Anodenpasten scherverdünnende Eigenschaften auf. Insbesondere weist zumindest eine der Kathodenpasten oder Anodenpasten 40% bis 60% Füllgrad auf.

Gemäss eines Ausführungsbeispiels weist zumindest eine der Kathodenpasten oder Anodenpasten eine Viskosität bei einer Schergeschwindigkeit von 10 [1/s] auf, die im Bereich von 5 bis einschliesslich 10 Pas liegt.

Gemäss eines Ausführungsbeispiels weist das Bindemittel CMC eine Dichte von 0.85 bis 1.0 g/cm³ auf. Insbesondere beträgt die Viskosität des CMC-Bindemittels 1500 bis 3000 [Pas] gemessen bei 25 Grad Celsius. Insbesondere umfasst das CMC Bindemittel ein freifliessendes Pulver mit einer mittleren Partikelgrösse von 0.5 mm, welches einfach zu dispergieren oder aufzulösen ist.

Gemäss eines Ausführungsbeispiels enthält die Kathodenpaste das LFP-Aktivmaterial oder das LFP-Aktivmaterial-Rezyklat in Pulverform als LFP Pulver. Das LFP Pulver weist insbesondere folgende Partikelgrössenverteilung auf: Dmin: >0.1 µm, D10: 3.0 +/- 2.0 µm, D50: 11.0 +/- 1.5 µm, D90: 24.0 +/- 4.0 µm, Dmax: <53 µm. Insbesondere beträgt die spezifische Oberfläche des LFP Pulvers 22 +/- 3.0 m²/g. Insbesondere beträgt die Klopfdichte des LFP Pulvers 1.15 +/- 0.2 g/cm³. Insbesondere beträgt der Feuchtegehalt des LFP Pulvers weniger als 800 ppm bei KF = 200°C.

Gemäss eines Ausführungsbeispiels liegt der pH-Wert der Kathodenpaste oder Anodenpaste im Bereich von 6 bis einschliesslich 10. Die Toleranz beträgt +/-1.5. Insbesondere enthält die Kathodenpaste 90 w% LFP-Aktivmaterial oder LFP-Aktivmaterial-Rezyklat oder eine Mischung aus LFP-Aktivmaterial und LFP-Aktivmaterial-Rezyklat, 2 w% CMC als Bindemittel, 3 w% SBR als Bindemittel. Gemäss eines Ausführungsbeispiels enthält die Kathodenpaste ein Leitadditiv im Bereich von 2 w% bis einschliesslich 6 w%. Gemäss eines Ausführungsbeispiels enthält die Kathodenpaste Wasser als Lösungsmittel. Insbesondere enthält das Leitadditiv zumindest eine der Komponenten C65 und KS6L.

Insbesondere enthält die Kathodenpaste ein Tensid, insbesondere ein nicht-ionisches Tensid. Das Tensid kann ein Alkoholalkoxylat umfassen, beispielsweise Isopropanol oder ein nichtionisches Alkoholoxylattensid, welches als Ecosurf ^{™} LF-45 vermarktet wird und nachfolgend als LF-45 bezeichnet wird. Das Tensid kann Polyethylenglycol-p-isooctylphenylether (C₁₄H₂₂O(C₂H₄O)ₙ) umfassen, welches als Triton^{™} X-100 vermarktet wird, nachfolgend als Triton X-100 bezeichnet. Das Tensid kann Polyoxyethylen (10) isooctylcyclohexylether oder 4-(C₈H₁₇)C₆H₁₀(OCH₂CH₂)nOH, mit n~10 umfassen, welches als Triton^{™} reduced vermarktet wird und nachfolgend als Triton-r bezeichnet wird. Das Tensid kann 2-[4-(2,4,4-trimethylpentan-2-yl) phenoxy] ethanol umfassen, welches als Ecosurf EH-9 ^{™} vermarktet wird und nachfolgend als EH-9 bezeichnet wird.

Gemäss eines Ausführungsbeispiels enthält die Anodenpaste 90 w% Graphit als AM, zumindest ein Bindemittel aus der Gruppe bestehend aus CMC und SBR mit einem Massenanteil von 2 w% bis einschliesslich 6%, ein Leitadditiv im Bereich von 2 w% bis einschliesslich 6 w%, sowie Wasser als Lösungsmittel. Insbesondere enthält das Leitadditiv zumindest eine der Komponenten C65 und KS6L. Beispielsweise enthält das Leitadditiv 2.5 w% C65 und 2.5 w% KS6L.

Gemäss eines Ausführungsbeispiels enthält zumindest eine der Kathodenpasten oder Anodenpasten ein zusätzliches Bindemittel. Das zusätzliche Bindemittel kann eine Emulsion enthalten, die eine fluorierte Polyacrylatemulsion umfasst oder SBR enthalten. SBR wird als Kürzel für Styrol-Butadien-Kautschuk verwendet. Beispielsweise kann als zusätzliches Bindemittel TRD202A oder TRD203A zum Einsatz kommen. TRD202A bezeichnet ein wasserbasiertes Hybridpolymerbindemittel, welches ein Acrylpolymer und ein Fluoropolymer, CMC, und ein leitfähiges Kohlenstoffadditiv enthält. Das zusätzliche Bindemittel kann zumindest ein Element aus der Gruppe bestehend aus SBR, TRD202A, TRD203A enthalten.

Gemäss eines Ausführungsbeispiels enthält zumindest eine der Kathodenpasten oder Anodenpasten ein Dispergierhilfsmittel. Insbesondere umfasst das Dispergierhilfsmittel ein Tensid. Das Dispergierhilfsmittel kann zumindest ein Element aus der Gruppe bestehend aus Isopropanol, Triton X-100, Triton-r, EH-9 oder LF-45 enthalten.

Gemäss eines Ausführungsbeispiels sind zumindest eine der Kathoden, Anoden und der Separatorelemente im Siebdruckverfahren hergestellt. Insbesondere kann zumindest eine der Anoden oder Kathoden eine Anodenpaste oder Kathodenpaste enthalten, die mehrere Anodenpastenteilschichten oder Kathodenpastenteilschichten enthält oder die aus mehreren Anodenpastenteilschichten oder Kathodenpastenteilschichten besteht.

Gemäss eines Ausführungsbeispiels wird zumindest eine der ersten Kathoden, der Anoden oder Separatorelemente oder zumindest eine der entsprechenden Kathodenpasten oder Anodenpasten verdichtet.

Gemäss eines Ausführungsbeispiels kann zumindest eine der Kathoden oder der Anoden aus mehreren Schichten bestehen. Insbesondere kann nach einem Ausführungsbeispiel die Kathode eine Dicke von 100 µm bis einschliesslich 300 µm aufweisen. Beispielsweise kann die Kathode eine Dicke von 150 µm bis einschliesslich 300 µm aufweisen. Insbesondere kann nach einem Ausführungsbeispiel die Anode eine Dicke von 30 µm bis einschliesslich 300 µm aufweisen. Beispielsweise kann die Anode eine Dicke von 30 µm bis einschliesslich 300 µm aufweisen.

Insbesondere kann nach einem Ausführungsbeispiel das Separatorelement eine Dicke von 1 µm bis einschliesslich 50 µm aufweisen. Insbesondere kann nach einem Ausführungsbeispiel der erste Ableiter eine Dicke von 1 µm bis einschliesslich 50 µm aufweisen. Insbesondere kann nach einem Ausführungsbeispiel der zweite Ableiter eine Dicke von 1 µm bis einschliesslich 50 µm aufweisen.

Insbesondere kann nach einem Ausführungsbeispiel der erste Ableiter aus Aluminium oder einer Aluminiumverbindung bestehen. Der erste Ableiter ist gemäss diesem Ausführungsbeispiel als positiver Ableiter ausgebildet. Insbesondere kann nach einem Ausführungsbeispiel der zweite Ableiter aus Kupfer oder einer Kupferverbindung bestehen. Der zweite Ableiter ist gemäss diesem Ausführungsbeispiel als negativer Ableiter ausgebildet.

Gemäss eines Ausführungsbeispiels enthält der Energiespeicher ein Gehäuse, einen ersten Ableiter, zumindest eine der Zellen, einen zweiten Ableiter, wobei das Gehäuse ein Gehäuseelement umfasst, wobei das Gehäuseelement ein Element aus der Gruppe bestehend aus einem Gehäuseboden, einem Gehäusedeckel einem Gehäuseseitenelement umfasst. Insbesondere sind der erste Ableiter und der zweite Ableiter mit der Zelle derart verbunden, dass ein Elektronenfluss/Ionenfluss vom ersten Ableiter durch die Zelle zum zweiten Ableiter erfolgen kann, wenn ein geschlossener Stromkreis ausgebildet ist.

Gemäss eines Ausführungsbeispiels enthält zumindest einer der ersten oder zweiten Ableiter eine siebgedruckte Ableiterschicht. Gemäss eines Ausführungsbeispiels enthält das Gehäuse zumindest ein siebgedrucktes Gehäuseelement. Insbesondere kann die Zelle einen flüssigen Elektrolyten enthalten.

Ein Verfahren zur Herstellung einer Zelle für einen Energiespeicher, wobei die Zelle mindestens eine Kathode, eine Anode, ein zwischen der Kathode und der Anode angeordnetes Separatorelement sowie einen Elektrolyten umfasst, wobei die Kathode, die Anode und das Separatorelement im Betriebszustand mit dem Elektrolyten in Kontakt sind, ist dadurch gekennzeichnet, dass die Kathode mittels einer ersten Siebdruckvorrichtung hergestellt wird, die Anode mittels einer zweiten Siebdruckvorrichtung hergestellt wird, wobei die Kathode eine Kathodenpaste umfasst, die ein LFP-Aktivmaterial oder ein LFP-Aktivmaterial-Rezyklat oder ein Gemisch aus LFP-Aktivmaterial und LFP-Aktivmaterial-Rezyklat enthält. Die Anode umfasst eine Anodenpaste, die Graphit enthält. Zumindest eine der Kathoden oder Anoden kann in mindestens zwei aufeinanderfolgenden Druckschritten hergestellt werden, wobei in einem ersten Druckschritt ein erster Anteil einer Elektrodenpaste, insbesondere einer Kathodenpaste oder einer Anodenpaste, auf ein Substrat aufgetragen wird, wobei anschliessend eine Druckkraft auf den ersten Anteil der Elektrodenpaste aufgebracht wird, um den ersten Anteil der Elektrodenpaste zu verdichten, sodass ein verdichteter erster Anteil der Elektrodenpaste erhalten wird, wobei in einem zweiten Druckschritt ein zweiter Anteil der Elektrodenpaste auf den verdichteten ersten Anteil der Elektrodenpaste aufgetragen wird, wobei anschliessend eine Druckkraft auf den zweiten Anteil der Elektrodenpaste aufgebracht wird, um den zweiten Anteil der Elektrodenpaste zu verdichten, sodass ein verdichteter zweiter Anteil der Elektrodenpaste erhalten wird.

Insbesondere kann zumindest eine der Kathodenpasten oder Anodenpasten ein Bindemittel enthalten, das CMC enthält, wobei Wasser als Lösungsmittel verwendet wird.

Ein Verfahren zur Herstellung eines Energiespeichers, welcher ein Gehäuse, eine Zelle, einen ersten Ableiter und einen zweiten Ableiter umfasst, wobei die Zelle mindestens eine Kathode, mindestens eine Anode, ein zwischen der Kathode und der Anode angeordnetes Separatorelement sowie einen Elektrolyten umfasst, wobei sich die Kathode, die Anode und das Separatorelement im Betriebszustand im Elektrolyten befinden, ist dadurch gekennzeichnet, dass die Kathode mittels einer ersten Siebdruckvorrichtung hergestellt wird, die Anode mittels einer zweiten Siebdruckvorrichtung hergestellt wird, wobei die Kathode durch Siebdruck mit dem ersten Ableiter verbunden wird, wobei das Separatorelement zwischen der Kathode und der Anode angeordnet wird, wobei die Anode durch Siebdruck mit dem zweiten Ableiter verbunden wird. Gemäss eines Ausführungsbeispiels wird das Separatorelement mittels einer dritten Siebdruckvorrichtung hergestellt. Insbesondere umfasst die Kathode eine Kathodenpaste, die ein LFP-Aktivmaterial oder ein LFP-Aktivmaterial-Rezyklat oder ein Gemisch aus LFP-Aktivmaterial und LFP-Aktivmaterial-Rezyklat enthält. Insbesondere umfasst die Anode eine Anodenpaste, die Graphit enthält. Insbesondere enthält zumindest eine der Kathodenpasten oder Anodenpasten ein Bindemittel, welches CMC enthält.

Gemäss eines Ausführungsbeispiels werden die Kathodenpaste oder Anodenpaste für einen Energiespeicher nach einem der vorhergehenden Ausführungsbeispiele in einem Extruder oder auf einer Kalandriervorrichtung hergestellt. Insbesondere kann zumindest eine der Kathodenpasten oder Anodenpasten zu einem Kathodenpastenextrudat oder Anodenpastenextrudat extrudiert werden. Insbesondere kann das Kathodenpastenextrudat oder Anodenpastenextrudat im Siebdruckverfahren zu der Kathode oder Anode weiterverarbeitet werden.

Gemäss eines Ausführungsbeispiels wird der erste Ableiter mittels einer ersten Ableitersiebdruckvorrichtung hergestellt. Gemäss eines Ausführungsbeispiels wird der zweite Ableiter mittels einer zweiten Ableitersiebdruckvorrichtung hergestellt.

Gemäss eines Ausführungsbeispiels erfolgt das Siebdruckverfahren zur Herstellung der Kathode in der ersten Siebdruckvorrichtung, wobei die erste Siebdruckvorrichtung eine erste Trocknungseinheit und eine erste Stapelvorrichtung enthält, mittels welcher die Kathode siebgeruckt, gegebenenfalls getrocknet und mit dem ersten Ableiter verbunden wird. Insbesondere erfolgt das Siebdruckverfahren zur Herstellung der Anode in der zweiten Siebdruckvorrichtung, wobei die zweite Siebdruckvorrichtung eine zweite Trocknungseinheit und eine zweite Stapelvorrichtung enthält, mittels welcher die Anode siebgeruckt, gegebenenfalls getrocknet und mit dem zweiten Ableiter verbunden wird. Insbesondere kann eine dritte Siebdruckvorrichtung zur Herstellung des Separatorelements vorgesehen sein. Gemäss eines Ausführungsbeispiels sind eine erste Ableitersiebdruckvorrichtung, gegebenenfalls eine erste Ableitertrocknungseinheit und eine erste Ableiterstapelvorrichtung vorgesehen, mittels welcher der erste Ableiter siebgeruckt, gegebenenfalls getrocknet und mit der Zelle verbunden wird. Gemäss eines Ausführungsbeispiels sind eine zweite Ableitersiebdruckvorrichtung, gegebenenfalls eine zweite Ableitertrocknungseinheit und eine zweite Ableiterstapelvorrichtung vorgesehen, mittels welcher der zweite Ableiter siebgeruckt, gegebenenfalls getrocknet und mit der Zelle wird. Gemäss eines Ausführungsbeispiels sind eine Gehäuseelementsiebdruckvorrichtung, gegebenenfalls eine Gehäuseelementtrocknungsvorrichtung oder eine Gehäuseelementstapelvorrichtung vorgesehen, mittels welcher zumindest ein Gehäuseelement siebgedruckt wird.

Das LFP-Aktivmaterial oder das LFP-Aktivmaterial-Rezyklat oder ein Gemisch aus LFP-Aktivmaterial und LFP-Aktivmaterial-Rezyklat kann in Pulverform mit einem leitfähigen Additiv gemischt werden und mit Wasser und einem Bindemittel gemischt werden, wodurch eine strukturviskose Kathodenpaste erhältlich ist, die mittels eines Siebdruckverfahrens verarbeitbar ist. In Ergänzung zu dem CMC-Bindemittel kann eine Emulsion verwendet werden, die eine fluorierte Polyacrylatemulsion enthält. Beispielsweise kann TRD202A oder TRD203A zum Einsatz kommen.

Insbesondere kann nach einem Ausführungsbeispiel die Anode einen Massenanteil an aktiver Masse von 50% bis einschliesslich 95% aufweisen, ein Bindemittel, ein Lösungsmittel und/oder ein leitfähiges Additiv enthalten. Beispielsweise enthält die Anode als aktive Masse Graphit, als Bindemittel CMC und als Leitadditiv C65. Gemäss eines Ausführungsbeispiels beträgt der Massenanteil an aktiver Masse 90%, der Massenanteil an CMC 5% und der Massenanteil an Leitadditiv 5 %. Die Anode kann eine Porosität aufweisen, die im Bereich von 20% bis einschliesslich 50% liegt. Beispielsweise kann die Porosität einer Anode, die einen Massenanteil an aktiver Masse von 90%, einen Massenanteil an CMC von 5% und einen Massenanteil an Leitadditiv von 5 % enthält, 30% aufweisen. Die Schichtdicke einer Anode kann im Bereich von 50 µm bis einschliesslich 300 µm liegen. Insbesondere beträgt die Schichtdicke dieser Anode 100 µm.

Insbesondere kann nach einem Ausführungsbeispiel das Separatorelement aus zwei Deckschichten aus Polypropylen und einer zwischen den beiden Deckschichten angeordneten Zwischenschicht aus Polyethylen bestehen. Gemäss dieses Ausführungsbeispiels kann die Dicke des Separatorelements insbesondere 38 µm betragen. Gemäss eines Ausführungsbeispiels enthält das Separatorelement eine Mischung aus Partikeln aus anorganischen Substanzen in einem Matrixmaterial und einem mikroporösen Polyolefin, welches geeignet ist, einen Ionenfluss von der Anode zur Kathode zu unterbinden. Die Partikel aus anorganischen Substanzen können zumindest ein Element aus der Gruppe bestehend aus SiO₂, Al₂O₃, CaCO₃, TiO₂, SiS₂, SiPO₄ enthalten. Das Matrixmaterial kann zumindest ein Element aus der Gruppe bestehend aus Polyethylenoxid, Polyvinylidenfluorid, (nachfolgend als PVDF bezeichnet, N-Methyl-2-pyrrolidon (NMP), CMC, Polytetrafluorethylen (PTFE), Polyurethan (PU), Polyacrylnitril (PAN), Polymethylmethacrylat (PMMA) oder Polytetraethylenglykoldiacrylat enthalten. Das mikroporöse Polyolefin kann eine Polyolefinmembran umfassen, beispielsweise eine Polyethylenmembran. Das Separatorelement kann eine Porosität aufweisen, die im Bereich von 20% bis 80% liegt.

Insbesondere kann das Separatorelement nach einem Ausführungsbeispiel einen Elektrolyten enthalten, der zu 50 Mol% aus LiPF₆ und zu 50 Mol % aus einer Mischung von Ethylencarbonat (EC) und Diethylcarbonat (DEC) besteht. Alternativ oder ergänzend hierzu kann der Elektrolyt zumindest eine der Komponenten MDO, VC und EMC enthalten. Als MDO wird die Komponente 3-Methyl-1,4,3-Dioxazol-5-one bezeichnet. Als EMC wird die Komponente Ethylmethylcarbonat bezeichnet. Als VC wird die Komponente Vinylencarbonat bezeichnet. Für die Zyklisierungstests wird bevorzugt der Elektrolyt 1 M LiPF6 in EC:DEC (1:1 wt. %), 99.9 % H₂O: 20 ppm max, 2 % VC verwendet, der nachfolgend als STD bezeichnet wird.

Um eine Elektrodenpaste, insbesondere eine Kathodenpaste, eine Anodenpaste, oder ein Separatorelement mittels eines Siebdruckverfahrens verarbeiten zu können, ist es vorteilhaft, wenn diese strukturviskose Eigenschaften aufweist, das heisst, die Viskosität der Elektrodenpaste nimmt bei zunehmenden Scherkräften ab. Wenn Scherkräfte auf die Elektrodenpaste wirken, beispielsweise beim Auftragen der Elektrodenpaste auf ein Sieb einer Siebdruckvorrichtung, nimmt ihre Viskosität ab, was das Siebdrucken erleichtert. Wenn Scherkräfte auf die Elektrodenpaste wirken, entspricht deren Viskosität der dynamischen Viskosität. Die dynamische Viskosität beträgt vorteilhafterweise nicht mehr als 100 Pas, insbesondere nicht mehr als 75 Pas, besonders bevorzugt nicht mehr als 60 Pas. Nach Abschluss des Siebdruckverfahrens erhöht sich die Viskosität auf die statische Viskosität, weil der Einfluss der Scherkräfte wegfällt. Beispielsweise kann die statische Viskosität der entsprechenden Elektrodenpaste im Ruhezustand mehr als 150 Pas betragen. Beispielsweise kann die statische Viskosität im Bereich von 150 bis 1000 Pas liegen. Durch einen nachträglichen Trocknungsvorgang kann die statische Viskosität der Elektrodenpaste weiter erhöht werden. Zusätzlich kann die Elektrodenpaste komprimiert werden, beispielsweise mittels Kalandrieren oder Walzen.

Gemäss eines Ausführungsbeispiels sind die Zellen als Pouchzellen ausgebildet. Insbesondere haben die Zellen nachfolgende Zellabmessungen: beispielsweise liegt die Länge der Zelle im Bereich von 340 mm bis einschliesslich 542 mm. Beispielsweise liegt die Breite der Zelle im Bereich von 80 mm bis einschliesslich 101 mm. Beispielsweise liegt die Dicke der Zelle im Bereich von 8.5 bis einschliesslich 14 mm.

Gemäss eines Ausführungsbeispiels weisen die Zellen einander gegenüberliegende Anschlüsse auf. Beispielsweise liegt die Länge der Anschlüsse im Bereich von 16 bis einschliesslich 25 mm. Beispielsweise liegt die Breite der Anschlüsse von 30 bis einschliesslich 55 mm. Beispielsweise liegt die Dicke der Anschlüsse im Bereich von 0.2 bis einschliesslich 0.4 mm. Gemäss eines Ausführungsbeispiels enthalten die Anschlüsse eine Schutzbeschichtung aus Nickel mit einer Schichtdicke von mindestens 0.01 mm. Gemäss eines Ausführungsbeispiels enthalten die positiven und negativen Anschlüsse Kupfer als Grundmaterial.

Gemäss eines Ausführungsbeispiels beträgt die Zellmasse maximal 3 kg. Gemäss eines Ausführungsbeispiels beträgt das Volumen der Zelle höchstens als 3 Liter. Gemäss eines Ausführungsbeispiels enthält die Zelle eine gefaltete Zelldichtung. Gemäss eines Ausführungsbeispiels ist eine Vorrichtung zur Sicherung einer Zellüberwachung für eine einzelne Zelle vorgesehen (single cell supervisor).

Gemäss eines Ausführungsbeispiels beträgt die Kapazität der Zelle mindestens 59 Ah. Gemäss eines Ausführungsbeispiels beträgt die spezifische Energie mindestens 242 Wh/kg insbesondere beträgt die die spezifische Energie mindestens 283 Wh/kg.

Insbesondere kann nach einem Ausführungsbeispiel der Energiespeicher eine Mehrzahl von Zellen enthalten, die mindestens einen Zellstapel ausbilden. Insbesondere kann nach einem Ausführungsbeispiel die Mehrzahl von Zellen in Parallelschaltung oder in Serienschaltung angeordnet sein. Bei Serienschaltung kann eine Betriebsspannung von mindestens 12 V erhältlich sein.

Insbesondere kann nach einem Ausführungsbeispiel der Zellstapel mindestens eine erste und eine zweite Zelle aufweisen, wobei eine Zwischenschicht zwischen der ersten und zweiten Zelle angeordnet ist, wobei die Zwischenschicht den Ableiter für die Kathode der ersten Zelle vom Ableiter für die Anode der zweiten Zelle trennt, sodass sich eine Gesamtspannung zwischen dem ersten Ableiter und dem zweiten Ableiter aus der Summe der Zellspannungen der ersten und zweiten Zelle ergibt. Insbesondere kann nach einem Ausführungsbeispiel die Zwischenschicht elektrisch leitfähig sein, sodass ein Stromfluss oder Ionenfluss von der ersten Zelle in die zweite Zelle erfolgen kann.

Insbesondere können nach einem Ausführungsbeispiel die Kathode oder Anode und das zwischen Kathode und Anode angeordnete Separatorelement in der Zelle derart gestapelt sein, dass das Separatorelement oberhalb der Kathode angeordnet ist und die Anode oberhalb des Separatorelements angeordnet ist. Das Separatorelement liegt gemäss diesem Ausführungsbeispiel auf der Kathode auf.

Insbesondere kann nach einem Ausführungsbeispiel Kathode, die Anode oder das Separatorelement ein porenhaltiges Material enthalten.

Insbesondere können der erste oder zweite Ableiter nach einem Ausführungsbeispiel zumindest teilweise ein Gehäuse ausbilden. Insbesondere können nach einem Ausführungsbeispiel der erste oder zweite Ableiter zumindest teilweise ein Kühlelement ausbilden. Gemäss eines Ausführungsbeispiels umfasst der Energiespeicher eine oder mehrere Zellen sowie die ersten und zweiten Ableiter. Als Ableiter kann beispielsweise eine Aluminiumfolie oder eine Nickelfolie zum Einsatz kommen.

Insbesondere kann nach einem Ausführungsbeispiel auf der ersten Druckauflage oder der zweiten Druckauflage oder der dritten Druckauflage eine Mehrzahl von entsprechenden Kathoden oder Anoden oder Separatorelementen für eine Mehrzahl von Zellen nebeneinander angeordnet werden.

Die Zelle kann in einem Gehäuse eingeschlossen werden. Ein derartiges Gehäuse kann vorzugsweise einen Kunststoff enthalten, der beständig gegenüber sämtlichen Komponenten ist, aus welchen die Kathode, Anode, das Separatorelement und der Elektrolyt besteht. Das Gehäuse kann als siebgedrucktes Gehäuse ausgebildet sein, wie nachfolgend beschrieben wird.

Ein Akkumulator gemäss eines der vorhergehenden Ausführungsbeispiele umfasst ein Gehäuse, einen ersten Ableiter, eine Kathode, ein Separatorelement, eine Anode, einen zweiten Ableiter. Das Gehäuse umfasst ein Gehäuseelement, wobei das Gehäuseelement ein Element aus der Gruppe bestehend aus einem Gehäuseboden, einem Gehäusedeckel und zumindest einem Gehäuseseitenelement umfasst. Der erste Ableiter ist gemäss dieses Ausführungsbeispiels auf dem Gehäuseboden angeordnet. Die Kathode ist auf dem ersten Ableiter angeordnet. Das Separatorelement ist auf der Kathode angeordnet. Die Anode ist auf dem Separatorelement angeordnet. Der zweite Ableiter ist auf der Anode angeordnet. Der Gehäusedeckel ist auf dem zweiten Ableiter angeordnet. Zumindest die Kathode ist als siebgedruckte Elektrode ausgebildet, das Separatorelement ist als siebgedruckte Trennschicht und die Anode als zweite siebgedruckte Elektrode ausgebildet. Der erste Ableiter ist angrenzend an den Gehäuseboden angeordnet und teilweise innerhalb eines Gehäuseseitenelements angeordnet. Der zweite Ableiter ist angrenzend an den Gehäusedeckel ausgebildet und teilweise innerhalb eines Gehäuseseitenelements angeordnet.

Insbesondere enthält zumindest eine der Kathoden oder Anoden mehrere siebgedruckte Teilschichten. Die Kathode oder Anode kann eine erste siebgedruckte Teilschicht enthalten, deren Zusammensetzung sich von einer zweiten siebgedruckten Teilschicht unterscheidet. Zumindest einer der ersten oder zweiten Ableiter kann eine siebgedruckte Ableiterschicht enthalten. Das Gehäuse kann zumindest ein siebgedrucktes Gehäuseelement enthalten. Ein flüssiger Elektrolyt oder ein Feststoffelektrolyt können vorgesehen werden.

### Kurzbeschreibung der Zeichnungen

Nachfolgend wird der erfindungsgemässe Energiespeicher anhand einiger Ausführungsbeispiele dargestellt. Es zeigen
Fig. 1 ein Verfahrensschema eines ersten Ausführungsbeispiels der Erfindung,
Fig. 2 ein Verfahrensschema eines zweiten Ausführungsbeispiels der Erfindung,
Fig. 3 ein Verfahrensschema eines dritten Ausführungsbeispiels der Erfindung,
Fig. 4 ein Verfahrensschema eines vierten Ausführungsbeispiels der Erfindung.

### Detaillierte Beschreibung der Zeichnungen

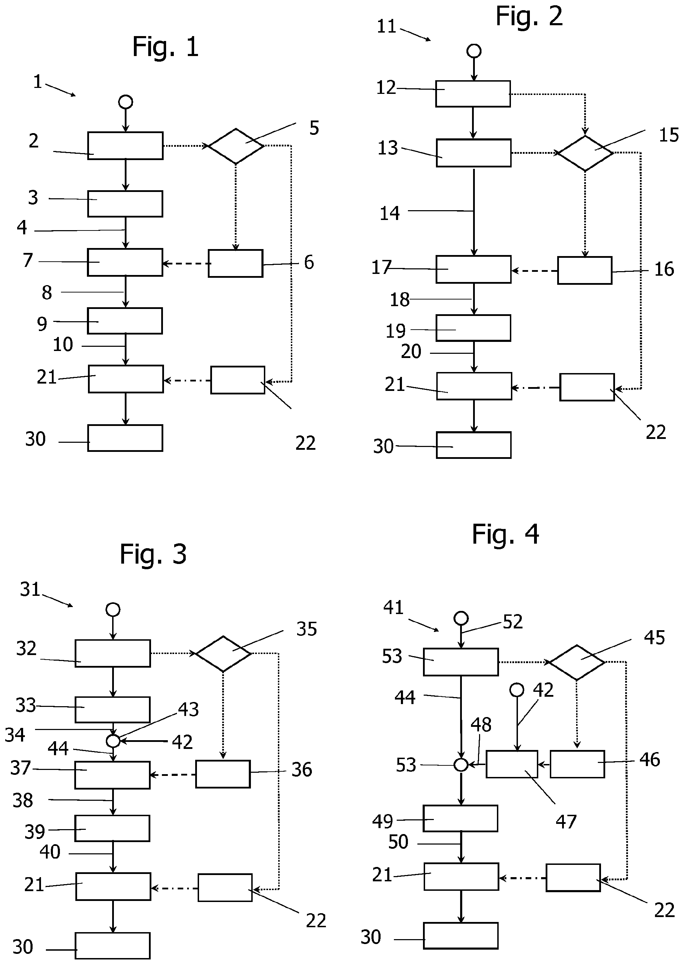

Fig. 1 zeigt ein Verfahrensschema für ein erstes Ausführungsbeispiel eines Verfahrens 1 zur trockenen Verarbeitung eines LFP-Aktivmaterial-Rezyklats 2. Mittels des Verfahrens zur Herstellung einer Kathodenpaste 8 wird das LFP-Aktivmaterial-Rezyklat 2 während des Produktionsprozesses einer Zelle 30 eines Energiespeichers, insbesondere für eine Lithiumionenbatterie, zur Wiederverwendung des LFP-Aktivmaterial-Rezyklats 2 in der Lithiumionenbatterie eingesetzt, um die Kathodenpaste 8 herzustellen. Das LFP-Aktivmaterial-Rezyklat 2 wird durch Mahlen in einer Zerkleinerungsvorrichtung 3 auf eine mittlere Korngrösse von 5 µm reduziert, sodass ein gemahlenes trockenes LFP-Aktivmaterial-Rezyklat 4 erhalten wird, bevor die Kathodenpaste 8 in einer Extrusionsvorrichtung 7 unter Zugabe des gemahlenen trockenen LFP-Aktivmaterial-Rezyklats 4 hergestellt wird.

Gemäss des vorliegenden Ausführungsbeispiels wird somit das LFP-Aktivmaterial-Rezyklat als trockenes LFP-Aktivmaterial-Rezyklat 2 bereitgestellt. Das trockene LFP-Aktivmaterial-Rezyklat 2 wird mittels der Zerkleinerungsvorrichtung 3 gemahlen, wobei das LFP-Aktivmaterial-Rezyklat 2 durch das Mahlen in der Zerkleinerungsvorrichtung 3 auf eine mittlere Korngrösse von 5 µm reduziert wird. Hierdurch wird ein gemahlenes trockenes LFP-Aktivmaterial-Rezyklat 4 erhalten.

Gemäss des vorliegenden Ausführungsbeispiels werden dem gemahlenen, trockenen LFP-Aktivmaterial-Rezyklat 4 zumindest eine Substanz 6 aus der Gruppe bestehend aus Additiven, Lösungsmitteln und Bindemitteln beigegeben, sodass eine Kathodenpaste erhalten wird. Die erforderliche Menge der Substanz 6 kann aus einer Analyse 5 des gemahlenen trockenen LFP-Aktivmaterial-Rezyklats 2 erhalten werden. Die Beigabe der entsprechenden Substanz 6 zum gemahlenen trockenen LFP-Aktivmaterial-Rezyklat 4 kann in einer Extrusionsvorrichtung 7 erfolgen. Mittels der Extrusionsvorrichtung 7 wird die Kathodenpaste 8 hergestellt. Die Kathodenpaste 8 kann einem Fertigungsverfahren 9 zur Herstellung einer Elektrode 10 zugeführt werden. Die Elektrode 10 kann in einem Zellbauverfahren 21 verwendet werden, um die Zelle 30 eines Energiespeichers herzustellen. Basierend auf den Resultaten der Analyse 5 kann im Zellbauverfahren 21 ein Elektrolyt 22 zugegeben werden.

Fig. 2 zeigt ein Verfahrensschema für ein zweites Ausführungsbeispiel eines Verfahrens 11 zur Verarbeitung eines LFP-Aktivmaterial-Rezyklats 14, welches als Suspension vorliegt. Mittels des Verfahrens zur Herstellung einer Kathodenpaste 18 wird das LFP-Aktivmaterial-Rezyklat 14 während des Produktionsprozesses einer Zelle 30 eines Energiespeichers, insbesondere für eine Lithiumionenbatterie, zur Wiederverwendung des LFP-Aktivmaterial-Rezyklats 14 in der Lithiumionenbatterie gegebenenfalls mit einem LFP-Aktivmaterial vermischt, bevor die Herstellung der Kathodenpaste 18 erfolgt oder das LFP-Aktivmaterial-Rezyklat 14 der Kathodenpaste 18 für die Lithiumionenbatterie beigemischt wird. Ein trockenes LFP-Aktivmaterial-Rezyklat 12 wird durch Mahlen in einer Zerkleinerungsvorrichtung 13 auf eine mittlere Korngrösse von 5 µm reduziert, bevor es als LFP-Aktivmaterial-Rezyklat 14 in Suspension in einer Extrusionsvorrichtung 17 oder mit der Kathodenpaste 18 oder gegebenenfalls dem LFP-Aktivmaterial vermischt wird, was in Fig. 2 nicht gezeigt ist, siehe hierzu die Varianten gemäss Fig. 3 oder Fig. 4.

Gemäss des vorliegenden Ausführungsbeispiels wird das LFP-Aktivmaterial-Rezyklat 14 als Suspension bereitgestellt. Das trockene LFP-Aktivmaterial-Rezyklat 12 wird in einer vorgelagerten Zerkleinerungsvorrichtung 13 gemahlen, wobei das trockene LFP-Aktivmaterial-Rezyklat durch Mahlen auf eine mittlere Korngrösse von 5 µm reduziert wird. Hierdurch wird ein gemahlenes LFP-Aktivmaterial-Rezyklat 14 in Suspension erhalten, wenn dem gemahlenen LFP-Aktivmaterial-Rezyklat 14 eine Substanz 16 aus der Gruppe bestehend aus Additiven, Lösungsmitteln und Bindemitteln beigegeben wird, was zeichnerisch nicht dargestellt ist.

Gemäss des vorliegenden Ausführungsbeispiels werden dem LFP-Aktivmaterial-Rezyklat 14 in einer Extrusionsvorrichtung 17 zumindest eine Substanz 16 aus der Gruppe bestehend aus Additiven, Lösungsmitteln und Bindemitteln beigegeben, sodass die Kathodenpaste 18 erhalten wird. Die erforderliche Menge der Substanz 16 kann aus einer Analyse 15 des trockenen LFP-Aktivmaterial-Rezyklats 12 erhalten werden. Die Beigabe der entsprechenden Substanz 16 kann auch einem in der Extrusionsvorrichtung 17 befindlichen LFP-Aktivmaterial zugegeben werden, was in Fig. 4 dargestellt ist. Mittels der Extrusionsvorrichtung 17 wird die Kathodenpaste 18 erhalten. Die Kathodenpaste 18 kann einem Fertigungsverfahren 19 zur Herstellung einer Elektrode 20 zugeführt werden. Die Elektrode 20 kann in einem Zellbauverfahren 21 verwendet werden, um die Zelle 30 eines Energiespeichers herzustellen. Basierend auf den Resultaten der Analyse 15 kann im Zellbauverfahren 21 ein Elektrolyt 22 zugegeben werden.

Fig. 3 zeigt ein Verfahrensschema für ein drittes Ausführungsbeispiel eines Verfahrens 31 zur Verarbeitung eines LFP-Aktivmaterial-Rezyklats 32. Mittels des Verfahrens zur Herstellung einer Kathodenpaste wird das LFP-Aktivmaterial-Rezyklat 32 während des Produktionsprozesses zur Herstellung einer Zelle 30 eines Energiespeichers, insbesondere für eine Lithiumionenbatterie, zur Wiederverwendung des LFP-Aktivmaterial-Rezyklats 32 in der Lithiumionenbatterie mit einem LFP-Aktivmaterial 42 vermischt, bevor die Herstellung der Kathodenpaste 38 erfolgt oder das LFP-Aktivmaterial-Rezyklat 32 der Kathodenpaste 38 für die Lithiumionenbatterie beigemischt wird. Das LFP-Aktivmaterial-Rezyklat 32 wird durch Mahlen in einer Zerkleinerungsvorrichtung 33 auf eine mittlere Korngrösse von 5 µm reduziert, bevor es mit dem LFP-Aktivmaterial 42 vermischt wird.

Das gemahlene trockene LFP-Aktivmaterial-Rezyklat 34 wird gemäss dieses Ausführungsbeispiels mit einem LFP-Aktivmaterial 42 vermischt. Die Vermischung des gemahlenen trockenen LFP-Aktivmaterial-Rezyklats 34 mit dem LFP-Aktivmaterial 42 kann in einer Mischvorrichtung 43 erfolgen. Insbesondere können das gemahlene trockene LFP-Aktivmaterial-Rezyklat 34 und das LFP-Aktivmaterial 42 als Pulver vorliegen. Mittels der Mischvorrichtung 43 wird ein gemischtes LFP-Aktivmaterial-Rezyklat 44 erhalten.

Gemäss des vorliegenden Ausführungsbeispiels wird dem gemischten LFP-Aktivmaterial-Rezyklat 44 zumindest eine Substanz 36 aus der Gruppe bestehend aus Additiven, Lösungsmitteln und Bindemitteln beigegeben, sodass eine Kathodenpaste 38 erhalten wird. Die erforderliche Menge der Substanz 36 kann mittels einer Analyse 35 des LFP-Aktivmaterial-Rezyklats 32 bestimmt werden. Die Beigabe der Substanz 36 zum gemischten LFP-Aktivmaterial-Rezyklat 44 kann in einer Extrusionsvorrichtung 37 erfolgen. Mittels der Extrusionsvorrichtung 37 wird die Kathodenpaste 38 erhalten. Die Kathodenpaste 38 kann einem Fertigungsverfahren 39 zur Herstellung einer Elektrode 40 zugeführt werden. Die Elektrode 40 kann in einem Zellbauverfahren 21 verwendet werden, um die Zelle 30 eines Energiespeichers herzustellen. Basierend auf den Resultaten der Analyse 35 kann im Zellbauverfahren 21 ein Elektrolyt 22 zugegeben werden.

Fig. 4 zeigt ein Verfahrensschema für ein viertes Ausführungsbeispiel eines Verfahrens zur Verarbeitung eines LFP-Aktivmaterial-Rezyklats 52. Mittels des Verfahrens zur Herstellung einer Kathodenpaste 48 wird das LFP-Aktivmaterial-Rezyklat 44 während des Produktionsprozesses einer Zelle 30 eines Energiespeichers, insbesondere für eine Lithiumionenbatterie, zur Wiederverwendung des LFP-Aktivmaterial-Rezyklats 44 in der Lithiumionenbatterie mit der Kathodenpaste 48 vermischt. Die Kathodenpaste 48 kann einem Fertigungsverfahren 49 zur Herstellung einer Elektrode 50 zugeführt werden. Die Elektrode 50 kann in einem Zellbauverfahren 21 verwendet werden, um die Zelle 30 eines Energiespeichers herzustellen. Basierend auf den Resultaten der Analyse 45 kann im Zellbauverfahren 21 ein Elektrolyt 22 zugegeben werden. Die Kathodenpaste 48 wird beispielsweise mittels einer Extrusionsvorrichtung 47 hergestellt. Der Extrusionsvorrichtung 47 wird ein LFP-Aktivmaterial sowie eine Substanz 46 aus der Gruppe bestehend aus Additiven, Lösungsmitteln und Bindemitteln zugeführt, sodass die Kathodenpaste 48 erhalten wird.

Das LFP-Aktivmaterial-Rezyklat 52 wird durch Mahlen in einer Zerkleinerungsvorrichtung 53 auf eine mittlere Korngrösse von 5 µm reduziert, bevor es mit der Kathodenpaste 48 vermischt wird, wodurch ein gemahlenes LFP-Aktivmaterial-Rezyklat 44 erhalten wird. Das gemahlene LFP-Aktivmaterial-Rezyklat 44 kann als Suspension oder als trockenes gemahlenes LFP-Aktivmaterial-Rezyklat bereitgestellt werden.

Die erforderliche Menge der Substanz 46 kann aus einer Analyse 45 des LFP-Aktivmaterial-Rezyklats 52 oder des gemahlenen LFP-Aktivmaterial-Rezyklats 44 erhalten werden. Die Beigabe der entsprechenden Substanz 46 kann dem LFP-Aktivmaterial 42 kann in der Extrusionsvorrichtung 47 beigegeben werden, wobei das LFP-Aktivmaterial 42 mit der Substanz 46 in der Extrusionsvorrichtung 47 vermischt wird, wodurch die Kathodenpaste 48 erhalten wird.

Für eine Fachperson ist offensichtlich, dass viele weitere Varianten zusätzlich zu den beschriebenen Ausführungsbeispielen möglich sind, ohne vom erfinderischen Konzept abzuweichen. Der Gegenstand der Erfindung wird somit durch die vorangehende Beschreibung nicht eingeschränkt und ist durch den Schutzbereich bestimmt, der durch die Ansprüche festgelegt ist. Für die Interpretation der Ansprüche oder der Beschreibung ist die breitest mögliche Lesart der Ansprüche massgeblich. Insbesondere sollen die Begriffe "enthalten" oder "beinhalten" derart interpretiert werden, dass sie sich auf Elemente, Komponenten oder Schritte in einer nicht-ausschliesslichen Bedeutung beziehen, wodurch angedeutet werden soll, dass die Elemente, Komponenten oder Schritte vorhanden sein können oder genutzt werden können, dass sie mit anderen Elementen, Komponenten oder Schritten kombiniert werden können, die nicht explizit erwähnt sind. Wenn die Ansprüche sich auf ein Element oder eine Komponente aus einer Gruppe beziehen, die aus A, B, C bis N Elementen oder Komponenten bestehen kann, soll diese Formulierung derart interpretiert werden, dass nur ein einziges Element dieser Gruppe erforderlich ist, und nicht eine Kombination von A und N, B und N oder irgendeiner anderen Kombination von zwei oder mehr Elementen oder Komponenten dieser Gruppe.

## Patentansprüche

1. Verfahren zur Herstellung einer Kathodenpaste (8, 18, 38, 48) enthaltend ein LFP-Aktivmaterial-Rezyklat (2, 12, 14, 32, 34, 44, 52) während des Produktionsprozesses für eine Lithiumionenbatterie zur Wiederverwendung des LFP-Aktivmaterial-Rezyklats in der Lithiumionenbatterie, **dadurch gekennzeichnet, dass** das LFP-Aktivmaterial-Rezyklat 2, 12, 14, 32, 34, 44, 52) durch Mahlen in einer Zerkleinerungsvorrichtung auf eine mittlere Korngrösse von 5 µm reduziert wird, bevor es mit der Kathodenpaste vermischt wird.

2. Verfahren nach Anspruch 1, wobei das LFP-Aktivmaterial-Rezyklat (2, 12, 14, 32, 34, 44, 52) mit einem LFP-Aktivmaterial vermischt wird, bevor die Kathodenpaste (8, 18, 38, 48) hergestellt wird.

3. Verfahren nach einem der Ansprüche 1 oder 2, wobei das LFP-Aktivmaterial-Rezyklat (2, 12, 14, 32, 34, 44, 52) in eine Extrusionsvorrichtung eingebracht wird.

4. Verfahren nach Anspruch 1, wobei das LFP-Aktivmaterial-Rezyklat (2, 12, 14, 32, 34, 44, 52) der Kathodenpaste beigemischt wird.

5. Verfahren nach einem der vorhergehenden Ansprüche, wobei die Kathodenpaste das LFP-Aktivmaterial-Rezyklat (2, 12, 14, 32, 34, 44, 52) mit einem Massenanteil von bis zu 80 Gewichtsprozent enthält.

6. Verfahren nach einem der vorhergehenden Ansprüche, wobei der Massenanteil des LFP-Aktivmaterial-Rezyklats (2, 12, 14, 32, 34, 44, 52) 10 Gewichtsprozent bis einschliesslich 20 Gewichtsprozent des LFP-Aktivmaterials beträgt.

7. Verfahren nach einem der vorhergehenden Ansprüche, wobei zumindest ein Element aus der Gruppe bestehend aus dem LFP-Aktivmaterial-Rezyklat (2, 12, 14, 32, 34, 44, 52) und dem LFP Aktivmaterial zumindest eine Substanz (6, 16, 36, 46) aus der Gruppe bestehend aus Additiven, Lösungsmitteln und Bindemitteln enthält.

8. Verfahren nach einem der vorhergehenden Ansprüche, wobei zumindest ein Element aus der Gruppe bestehend aus dem LFP-Aktivmaterial-Rezyklat (2, 12, 14, 32, 34, 44, 52) und dem LFP Aktivmaterial (42) 90 Gewichtsprozent bis einschliesslich 98 Gewichtsprozent LFP-Pulver und 2 Gewichtsprozent bis einschliesslich 10 Gewichtsprozent und zumindest eine Substanz (6, 16, 36, 46) aus der Gruppe bestehend aus Additiven, Lösungsmittel oder Bindemittel enthält.

9. Verfahren nach einem der vorhergehenden Ansprüche, wobei das LFP-Aktivmaterial-Rezyklat (2, 12, 14, 32, 34, 44, 52) in einer Dosieranlage zu dem LFP-Aktivmaterial (42) dosiert wird und anschliessend das LFP-Aktivmaterial-Rezyklat (2, 12, 14, 32, 34, 44, 52) in einer Mischanlage mit dem LFP-Aktivmaterial (42) gemischt wird.

10. Verfahren nach Anspruch 9, wobei die Dosieranlage das LFP-Aktivmaterial-Rezyklat (2, 12, 14, 32, 34, 44, 52) und das LFP-Aktivmaterial (42) als Pulver enthält.

11. Verfahren nach einem der vorhergehenden Ansprüche, wobei dem LFP-Aktivmaterial-Rezyklat (2, 12, 14, 32, 34, 44, 52) Lithium zugegeben wird.

12. Verfahren nach einem der vorhergehenden Ansprüche, wobei dem LFP-Aktivmaterial-Rezyklat (2, 12, 14, 32, 34, 44, 52) Lithium im Bereich von 0.1 Gewichtsprozent bis einschliesslich 5 Gewichtsprozent zugegeben wird.

13. Verfahren nach einem der vorhergehenden Ansprüche, wobei der Kathodenpaste (8, 18, 38, 48) oder dem LFP-Aktivmaterial bis zu 25 Gewichtsprozent LFP-Aktivmaterial-Rezyklat (2, 12, 14, 32, 34, 44, 52) zugegeben werden.

14. Verfahren zur Herstellung einer Kathode für einen Energiespeicher mittels einer Siebdruckvorrichtung, wobei mittels der Siebdruckvorrichtung eine mittels eines Verfahrens nach einem der vorhergehenden Ansprüche hergestellte Kathodenpaste auf ein Substrat aufgetragen wird, wobei die Siebdruckvorrichtung ein Sieb zur Aufnahme der Kathodenpaste enthält, wobei die Kathodenpaste mittels eines Presselements durch das Sieb auf das Substrat aufgetragen wird.

15. Eine Vorrichtung zur Herstellung einer Kathodenpaste enthaltend ein LFP-Aktivmaterial-Rezyklat (2, 12, 14, 32, 34, 44, 52) umfassend eine Zerkleinerungsvorrichtung (3, 13, 33, 53) in welcher das LFP-Aktivmaterial-Rezyklat durch Mahlen auf eine mittlere Korngrösse von 5 µm reduzierbar ist, wobei die Vorrichtung eine Mischvorrichtung (7, 17, 37, 43, 47) zur Mischung des LFP-Aktivmaterial-Rezyklats mit einer Substanz (6, 16, 36, 46), aus der Gruppe bestehend aus Additiven, Lösungsmitteln oder Bindemitteln oder einem LFP-Aktivmaterial umfasst.
